# DEMANDE DE BREVET EUROPEEN

(11) **EP 0 759 272 A1**
(43) Date de publication de la demande: **26.02.1997**
(21) Numéro de dépôt: 96201819.8
(22) Date de dépôt: 01.07.1996
(51) Int. Cl.: A23D 9/04, A23J 1/00, A23L 1/36, A23L 1/212, A23C 11/10, A23L 1/054, A23L 1/09, A23L 1/187, A23L 1/19, A23G 9/02, A23G 3/00, A23D 9/05

(54) **Fabrication d'un lait d'amandes de fruits**

(30) Priorité: 10.07.1995 EP 95810453
(71) Demandeur: SOCIETE DES PRODUITS NESTLE S.A., 1800 Vevey (CH)
(72) Inventeur: Juillerat, Marcel Alexandre, F-37230 Fondettes (FR); Perrinjaquet, Joel, New Millford, CT 06776 (US)
(74) Mandataire: Wavre, Claude-Alain

(57) **Abrégé**

Procédé de fabrication d'un lait d'amandes de fruits, dans lequel on broie des amandes de fruits dans de l'eau pour obtenir une dispersion aqueuse, on effectue une extraction aqueuse sur cette dispersion, on écarte les insolubles de l'extrait aqueux, on isole une fraction riche en protéines et/ou en lipides de l'extrait aqueux, on homogénéise cette fraction et on la stérilise, et utilisation du lait d'amandes de fruits ainsi obtenu pour la fabrication de produits alimentaires.

## Description

La présente invention a pour objet un procédé de fabrication d'un lait d'amandes de fruits et son utilisation pour la fabrication d'un produit alimentaire.

La présente invention a pour but de proposer un procédé de fabrication d'un lait d'amandes de fruits pouvant être utilisé dans le domaine alimentaire, notamment un lait d'amandes de fruits de grande stabilité thermique et ayant de bonnes propriétés autoémulsifiantes qui permettent la reconstitution d'émulsions fines et stables.

A cet effet, dans le procédé de fabrication d'un lait d'amandes de fruits selon la présente invention:
- on broie des amandes de fruits dans de l'eau, pour obtenir une dispersion aqueuse,
- on effectue une extraction aqueuse sur ladite dispersion,
- on écarte les insolubles de l'extrait aqueux,
- on isole une fraction riche en protéines et/ou en lipides de l'extrait aqueux,
- on homogénéise ladite fraction et on la stérilise.

Pour mettre en oeuvre le présent procédé, on peut choisir lesdites amandes parmi les amandes de fruits à noyaux tels que les pêches et les abricots, par exemple.

On peut broyer lesdites amandes, de préférence dépelliculées et concassées à sec, dans de l'eau à température ambiante ou modérément élevée, notamment à 10-35°C, dans un rapport pondéral adéquat, notamment un rapport de 1/12 à 1/3, par exemple. Pour ce faire, on peut utiliser un moulin, un broyeur ou un agitateur à haute vitesse tel qu'un appareil de type Polytron (R), par exemple. De préférence, on réalise deux broyages successifs, de manière à obtenir une dispersion aqueuse particulièrement fine.

On peut effectuer ladite extraction aqueuse à un pH supérieur ou inférieur au pH isolélectrique des protéines desdites amandes, à température ambiante ou modérément élevée, durant un temps suffisant pour permettre le passage en solution de la plus grande partie des matières solubles desdites amandes, notamment durant une ou plusieurs heures.

On peut écarter les insolubles par centrifugation, décantation, essorage ou filtrage, par exemple.

On peut isoler ladite fraction riche en protéines et/ou en lipides par précipitation isoélectrique, à savoir à un pH égal à ou proche du pH isolélectrique des protéines desdites amandes, ou par filtration tangentielle, ultrafiltration et/ou microfiltration. Dans le premier cas, on peut écarter le surnageant riche en sucres par centrifugation, filtration tangentielle, ultrafiltration et/ou microfiltration, et dans le second cas on peut directement écarter le filtrat ou le perméat, par exemple.

Dans un premier mode de réalisation préféré du présent procédé, on utilise des amandes douces d'abricots. Dans ce cas, de préférence, on effectue ladite extraction à pH 5-11 à 10-50°C pendant 1-5 h, on écarte les insolubles de l'extrait aqueux, on isole la fraction riche en protéines et/ou en lipides par précipitation à pH 3-5 à 10-50°C et l'on écarte le surnageant.

Dans un second mode de réalisation préféré du présent procédé, on utilise des amandes amères d'abricots. Dans ce cas, de préférence, on effectue ladite extraction à pH 5-11 à 10-45°C pendant 1 à 10 h, on écarte l'acide cyanhydrique de l'extrait aqueux par entraînement à la vapeur ou par distillation, on écarte les insolubles par centrifugation, on isole la fraction riche en protéines et/ou en lipides par filtration tangentielle, filtration et/ou microfiltration, et l'on écarte le filtrat.

On peut écrémer ledit extrait aqueux ou ladite fraction riche en protéines et en lipides, par exemple. On peut effectuer l'écrémage à 4-60°C, de préférence à 35-45°C, par exemple. On peut réaliser cet écrémage à l'aide d'une centrifugeuse ou d'une écrémeuse, par exemple. Suite à un tel écrémage, on peut conserver l'extrait aqueux ou la fraction riche en protéines et la crème à 1-5°C jusqu'à leur utilisation, par exemple.

Pour la stabiliser en réduisant la taille des particules lipidiques qu'elle contient, on peut homogénéiser ladite fraction riche en protéines et/ou en lipides dans un homogénéisateur, notamment un homogénéisateur à piston tel que fabriqué par la firme Rannie ou la firme Manton-Gaulin, en un ou plusieurs passages à 50-1000 bar à 45-85°C, de préférence à 200-350 bar à 45-65°C, par exemple.

De manière à éliminer la charge bactérienne et à permettre une bonne conservation en vue de son utilisation, notamment dans le domaine alimentaire, on peut stériliser ladite fraction riche en protéines et en lipides par chauffage à 80-160°C pendant 5 s à 60 min, de préférence à 130-150°C pendant 20-80 s, par exemple.

De préférence, on sèche ladite fraction, après la stérilisation, jusqu'à une teneur en eau résiduelle de 1-7 %. On peut réaliser ce séchage dans une tour d'atomisation, par lyophilisation, ou sur sécheur à rouleaux, par exemple.

Pour faciliter le séchage, autrement dit de manière à pouvoir sécher ladite fraction sans devoir craindre une séparation de ses phases lipidique et protéique, on peut lui ajouter un support de séchage avant de l'homogénéiser, à raison de 5-50%, de préférence 10-30% en poids sur matière sèche de la fraction. On peut utiliser comme support de séchage un hydrocolloïde tel que la gomme xanthane ou la malto-dextrine, par exemple.

On a constaté avec surprise que l'on obtient ainsi une fraction riche en protéines et/ou en lipides, sous forme séchée, présentant de bonnes propriétés autoémulsifiante lors de sa reconstitution.

La présente invention a donc aussi pour objet l'utilisation de tout ou partie d'un lait obtenu par le présent procédé pour la fabrication d'un produit alimentaire, notamment pour la fabrication de produits tels que des crèmes glacées, crèmes dessert, crèmes à café, sauces mayonnaise, sauces à salade, flans, poudings ou blancs-mangés, par exemple.

La présente invention a enfin également pour objet un procédé de reconstitution d'une fraction enrichie en lipides et/ou en protéines desdites amandes de fruits présentant un rapport pondéral lipides/protéines de 0,05-3,5, par mélange d'une fraction riche en protéines et/ou en lipides isolée dudit extrait aqueux avec une crème obtenue par un écrèmage dudit extrait aqueux ou de ladite fraction riche en protéines et en lipides.

Le procédé de fabrication d'un lait d'amandes de fruits, l'utilisation de ce lait pour la fabrication de produits alimentaires et la reconstitution d'une fraction enrichie en lipides selon la présente invention sont décrits plus en détails dans les exemples non limitatifs ci-après.

Dans ces exemples, les pourcentages et parties sont donnés en poids, sauf indication contraire, et les justements de pH sont réalisés par addition de HCl 5N ou de NaOH 5N.

### Exemple 1

On concasse à sec 50 kg d'amandes douces d'abricots dépelliculées présentant une teneur en matière sèche de 96 %, une teneur en protéines de 27,5% (13,2 kg) et une teneur en lipides de 52% (25 kg).

On broie ces amandes dans 400 kg d'eau à 25°C dans un agitateur à haute vitesse Polytron (R). On pompe directement la dispersion aqueuse ainsi obtenue dans un moulin colloïdal où on la soumet à un deuxième broyage de manière à obtenir une dispersion aqueuse particulièrement fine.

On effectue sur cette dispersion une extraction aqueuse à pH 7 à 25°C pendant 2 h.

On écarte les insolubles de l'extrait aqueux par centrifugation à 25°C pendant 3 h.

On recueille 360 kg d'extrait aqueux présentant une teneur en matière sèche de 8,9% et contenant 72,4 % des protéines et 74,2 % des lipides des amandes douces d'abricots dépelliculées de départ.

A partir de 65 kg de cet extrait aqueux, on isole une fraction riche en protéines et en lipides par précipitation à pH 4 à 25°C et l'on écarte le surnageant riche en sucres par centrifugation à 25°C.

On recueille ainsi 19,6 kg d'une fraction présentant une teneur en matière sèche de 11,9% et contenant 57,1% des protéines et 38% des lipides contenus dans les 65 kg d'extrait aqueux.

On ajuste la teneur en matière sèche de cette fraction à 10% par addition d'eau et l'on ajuste son pH à 7.

On ajoute de la gomme xanthane comme support de séchage à 11,3 kg de la fraction diluée, à raison de 5% en poids sur matière sèche de la fraction.

On homogénéise la fraction diluée à 50°C dans un homogénéisateur Rannie (R) en deux passages successifs, le premier à 250 bar et le second à 50 bar. La fraction homogénéisée ainsi obtenue présente une texture onctueuse.

On stérilise la fraction homogénéisée par chauffage à 140°C pendant 40 s.

On sèche la fraction stérilisée dans un atomiseur Niro (R), avec une vitesse d'atomisation de 22'000 t/min, une température d'entrée d'air de 170°C et une température de sortie du produit de 80°C.

On obtient ainsi un lait d'amandes douces d'abricots en poudre présentant une teneur en eau résiduelle de 2,2 % et un rapport pondéral lipides/protéines de 1,31.

### Exemple 2

On procède de la manière décrite à l'exemple 1, à l'exception du fait que l'on ajoute de la malto-dextrine au lieu de la gomme xanthane comme support de séchage à la fraction diluée, à raison de 20% sur matière sèche de la fraction.

On obtient ainsi un lait d'amandes douces d'abricots en poudre présentant une teneur en eau résiduelle de 2,3 % et un rapport pondéral lipides/protéines de 1,31.

### Exemple 3

On procède de la manière décrite à l'exemple 1 jusqu'à l'obtention de l'extrait aqueux dont on a écarté les insolubles.

On recueille 260 kg d'extrait aqueux riche en protéines et en lipides présentant une teneur en matière sèche de 8,9% et contenant 72,4 % des protéines et 74,2 % des lipides des amandes douces d'abricots dépelliculées de départ.

On écrème ces 260 kg d'extrait aqueux riche en protéines et en lipides à l'aide d'une centrifugeuse à 40°C.

D'une part, on recueille 21,8 kg de crème contenant 6,2 % des protéines et 95 % des lipides contenus dans les 260 kg d'extrait aqueux riche en protéines et en lipides, ce qui représente 1,5 % des protéines et 48,2 % des lipides des amandes douces dépelliculées de départ.

On ajuste la teneur en matière sèche de cette crème à 50,5% par addition d'eau et on la conserve à 4°C en vue d'un usage ultérieur.

D'autre part, on recueille 227 kg d'extrait aqueux riche en protéines présentant une teneur en matière sèche de 3,7% et contenant 81,9 % des protéines et 1,4 % des lipides contenus dans les 260 kg d'extrait aqueux riche en protéines et en lipides.

A partir de 160 kg de cet extrait aqueux riche en protéines, on isole une fraction riche en protéines par précipitation à pH 4 à 25°C et l'on écarte le surnageant riche en sucres par centrifugation à 25°C.

La fraction riche en protéines ainsi obtenue présente une teneur en matière sèche de 12,5% et contient 86,4 % des protéines contenues dans les 160 kg d'extrait aqueux riche en protéines.

On ajuste la teneur en matière sèche de cette fraction à 10% par addition d'eau et l'on ajuste son pH à 7.

On ajoute de la gomme xanthane comme support de séchage à 10,6 kg de la fraction diluée, à raison de 20 % sur matière sèche de la fraction.

On homogénéise la fraction diluée à 50°C dans un homogénéisateur de type Rannie (R) en deux passages successifs, le premier à 250 bar et le second à 50 bar. La fraction homogénéisée ainsi obtenue présente une texture onctueuse.

On stérilise la fraction homogénéisée par chauffage à 140°C pendant 40 s.

On sèche la fraction stérilisée dans un atomiseur Niro (R), avec une vitesse d'atomisation de 22'000 t/min, une température d'entrée d'air de 170°C et une température de sortie du produit de 80°C.

On obtient ainsi un lait d'amandes douces d'abricots écrémé en poudre présentant une teneur en eau résiduelle de 6,6% et un rapport pondéral lipides/protéines de 0,09.

### Exemple 4

On reconstitue une fraction enrichie en lipides et en protéines d'amandes douces d'abricots dépelliculées à partir de la crème obtenue à l'exemple 3 et de la fraction riche en protéines telle qu'obtenue à l'exemple 3 avant l'homogénéisation.

A cet effet, on mélange 1,1 kg de crème avec 12 kg de fraction riche en protéines.

On ajoute de la gomme xanthane comme support de séchage aux 13,1 kg de la fraction ainsi reconstituée, à raison de 5% sur matière sèche de la fraction.

On homogénéise la fraction reconstituée à 50°C dans un homogénéisateur de type Rannie (R) en deux passages successifs, le premier à 250 bar et le second à 50 bar.

On stérilise la fraction reconstituéee homogénéisé par chauffage à 140°C pendant 40 s.

On sèche la fraction reconstituée stérilisée dans un atomiseur Niro (R), avec une vitesse d'atomisation de 22'000 t/min, une température d'entrée d'air de 170°C et une température de sortie du produit de 80°C.

On obtient ainsi un lait d'amandes douces d'abricots reconstitué en poudre présentant une teneur en eau résiduelle de 4,5% et un rapport pondéral lipides/protéines de 0,54.

### Exemple 5

On reconstitue une fraction enrichie en lipides et en protéines d'amandes douces d'abricots, à partir d'une fraction riche en protéines et en lipides telle qu'obtenue à l'exemple 1 avant l'homogénéisation et d'une crème telle qu'obtenue à l'exemple 3, pour fabriquer un lait d'amandes douces d'abricots présentant un rapport pondéral lipides/protéines désiré.

A cet effet, on mélange 3,9 kg de ladite crème avec 6,9 kg de ladite fraction riche en protéines et en lipides.

On ajoute de la gomme xanthane comme support de séchage aux 10,8 kg de la fraction ainsi reconstituée, à raison de 5% sur matière sèche de la fraction.

On homogénéise la fraction reconstituée à 50°C dans un homogénéisateur de type Rannie (R) en deux passages successifs, le premier à 250 bar et le second à 50 bar.

On stérilise la fraction reconstituée homogénéisé par chauffage à 140°C pendant 40 s.

On sèche la fraction reconstituée stérilisée dans un atomiseur Niro (R), avec une vitesse d'atomisation de 22'000 t/min, une température d'entrée d'air de 170°C et une température de sortie du produit de 80°C.

On obtient ainsi un lait d'amandes douces d'abricots reconstitué en poudre présentant une teneur en eau résiduelle de 1,9% et un rapport pondéral lipides/protéines de 2,66.

### Exemple 6

On concasse à sec 50 kg d'amandes amères d'abricots dépelliculées présentant une teneur en matière sèche de 96 %, une teneur en protéines de 26% (12,5 kg) et une teneur en lipides de 47% (22,6 kg).

On broie ces amandes dans 180 kg d'eau à 25°C dans un agitateur à haute vitesse Polytron (R). On pompe directement la dispersion aqueuse ainsi obtenue dans un moulin colloïdal où on la soumet à un deuxième broyage de manière à obtenir une dispersion aqueuse particulièrement fine.

On effectue sur cette dispersion une extraction aqueuse à pH 6 à 40°C pendant 6 h.

On écarte l'acide cyanhydrique de l'extrait aqueux par entraînement à la vapeur puis on écarte les insolubles par centrifugation à 25°C pendant 3h.

On recueille un extrait aqueux présentant une teneur en matière sèche de 8,6% et contenant 67,2% des protéines et 73,7% des lipides des amandes amères d'abricots dépelliculées de départ.

A partir de cet extrait aqueux, on isole une fraction riche en protéines et en lipides par ultrafiltration à 50°C et l'on écarte le filtrat riche en sucres et en restes de cyanure.

On recueille ainsi 49,8 kg d'une fraction présentant une teneur en matière sèche de 37,3% et contenant 24,9% des protéines et 98,9% des lipides contenus dans les 360,3 kg d'extrait aqueux.

On écrème cette fraction riche en protéines et en lipides à 40°C à l'aide d'une centrifugeuse.

D'une part, on recueille 35,7 kg de crème présentant une teneur en matière sèche de 46,3% et contenant 63,9% des protéines et 93,8% des lipides contenus dans la fraction riche en protéines et en lipides.

D'autre part, on recueille 12,1 kg de fraction riche en protéines présentant une teneur en matière sèche de 5% et contenant 23,9 % des protéines et 0,4 % des lipides contenus dans la fraction riche en protéines et en lipides.

Pour fabriquer un lait d'amandes amères d'abricots présentant un rapport pondéral lipides/protéines désiré, on reconstitue une fraction enrichie en lipides et en protéines d'amandes amères d'abricots en mélangeant 11,5 kg de la fraction riche en protéines avec 1,8 kg de la crème obtenues au présent exemple.

On ajoute de la gomme xanthane comme support de séchage aux 13,3 kg de la fraction ainsi reconstituée, à raison de 10% sur matière sèche de la fraction.

On homogénéise la fraction reconstituée à 50°C dans un homogénéisateur de type Rannie (R) en deux passages successifs, le premier à 250 bar et le second à 50 bar. La fraction reconstituée homogénéisée ainsi obtenue présente une texture onctueuse.

On stérilise la fraction reconstituéee homogénéisé par chauffage à 140°C pendant 40 s.

On sèche la fraction reconstituée stérilisée dans un atomiseur Niro (R), avec une vitesse d'atomisation de 22'000 t/min, une température d'entrée d'air de 170°C et une température de sortie du produit de 80°C.

On obtient ainsi un lait d'amandes amères d'abricots reconstitué en poudre présentant une teneur en eau résiduelle de 4,5% et un rapport pondéral lipides/protéines de 1,41.

### Exemple 7

On utilise la crème d'amandes douces d'abricots telle qu'obtenue à l'exemple 3 pour la fabrication d'une crème glacée.

Pour ce faire, on dissout dans 630 g d'eau à 65°C 100 g de lait en poudre, 150 g de saccharose et 30 g de sirop de glucose.

On y ajoute 4 g d'arôme vanille et un mélange fondu comprenant 10 g de créme d'amandes douces d'abricots préalablement homogénéisée et stérilisée et 80 g de crème végétale Biscocrème (R).

On homogénéise cette préparation dans un homogénéisateur de type Rannie (R) en deux passages successifs, le premier à 140 bar et le second à 40 bar.

On pasteurise la préparation homogénéisée à 83°C pendant 30 s dans un échangeur à plaques.

On refroidit la préparation pasteurisée à 4°C et on la laisse reposer 12 h à cette température, avant d'effectuer le glaçage dans un freezer de type HOYER MF50 (R).

On obtient ainsi une crème glacée présentant une texture mousseuse.

On durcit ensuite cette crème glacée dans une cellule de refroidissement à air pulsé et on la stocke à -35°C.

Aprés tempérage à -18°C cette crème glacée présente un goût rappelant à la fois la vanille, l'amande et la pistache, ainsi qu'une texture lisse, glissante et peu grasse.

### Exemple 8

On utilise la crème d'amandes douces d'abricots telle qu'obtenue à l'exemple 3 pour la fabrication de flans cuits au four.

Pour ce faire, on mélange à 60°C dans un agitateur à haute vitesse 375 g de lait écrémé frais contenant 3,2 % de protéines, 71 g de lait de coco contenant 71 % de lipides et 6 % de protéines, et 30 g de lait en poudre contenant 32,8 % de protéines et 130 g de sucre.

On refroidit le mélange à 25°C.

Puis, tout en agitant, on incorpore au mélange 51 g de crème d'amandes douces d'abricots préalablement homogénéisée et stérilisée.

On ajoute à cette préparation 150 g d'oeufs battus.

On cuit les flans ainsi préparés au bain-marie, au four à 175°C pendant 45 min.

Ces flans cuits présentent une texture ferme, lisse et crémeuse, ainsi qu'un goût de coco.

### Exemple 9

On utilise la crème d'amandes douces d'abricots telle qu'obtenue à l'exemple 3 pour la fabrication de flans cuits au four.

Pour ce faire, on mélange à 60°C dans un agitateur à haute vitesse 400 g de lait écrémé frais contenant 3,2 % de protéines, 38 g de lait en poudre contenant 32,8 % de protéines et 130 g de sucre.

On refroidit le mélange à 25°C.

Puis, tout en agitant, on incorpore au mélange 70 g de crème fraîche contenant 35% de matière grasse et 103 g de crème d'amandes douces d'abricots préalablement homogénéisée et stérilisée.

On ajoute à cette préparation 150 g d'oeufs battus.

On cuit les flans ainsi préparés au bain-marie, au four à 175°C pendant 45 min.

Ces flans cuits présentent une texture ferme, lisse et crémeuse, ainsi qu'un goût d'amandes d'abricots.

### Exemple 10

On utilise la crème d'amandes douces d'abricots telle qu'obtenue à l'exemple 3 pour la fabrication de flans cuits au four faits uniquement de matière végétale et d'oeufs.

Pour ce faire, on mélange à 60°C dans un agitateur à haute vitesse 416 g d'eau, 30,6 g de concentrat de protéines végétales contenant 80% de protéines, et 130 g de sucre.

On refroidit le mélange à 25°C.

Puis, tout en agitant, on incorpore au mélange 154 g de crème d'amandes douces d'abricots préalablement homogénéisée et stérilisée.

On ajoute à l'ensemble 150 g d'oeufs battus.

On cuit les flans ainsi préparés au bain-marie, au four à 175°C pendant 45 min.

Ces flans cuits présentent une texture ferme, lisse et crémeuse, ainsi qu'un goût d'amandes d'abricots.

### Exemple 11

On utilise la crème d'amandes douces d'abricots telle qu'obtenue à l'exemple 3 pour la fabrication d'une sauce mayonnaise.

Pour ce faire, on chauffe à 45°C 15 kg de cette crème préalablement homogénéisée et stérilisée et on y ajoute 100 g de beurre "Annatto" en guise de colorant.

Parallèlement, on mélange successivement 67 kg d'eau déminéralisée avec 730 g de sel, 4 kg d'amidon, 3 kg de protéines lactiques, 120 g de gomme xanthane, 630 g de sucre, 500 g de citron, 5,5 kg de moutarde, 550 g de Fondor Maggi (R), 50 g de poivre, 50 g de Tabasco (R), 20 g d'arôme Maggi (R) liquide, et 150 g de curcuma. On ajuste le pH du mélange à 4.

Puis on homogénéise le mélange tout en y incorporant la graisse préalablement fondue, de manière à obtenir une émulsion.

On ajoute 40 g d'arôme d'oeuf à l'émulsion, on pasteurise la mayonnaise ainsi obtenue et on la conditionne à chaud.

Cette mayonnaise présente une texture onctueuse et un goût d'huile de noix.

### Exemple 12

On utilise la crème d'amandes douces d'abricots telle qu'obtenue à l'exemple 3, puis homogénéisée et stérilisée, pour la fabrication d'une crème en poudre pouvant être utilisée pour la fabrication de différents plats culinaires.

Pour ce faire, on mélange 10 kg d'eau, 2 g de sel, 6 g de caséinate de sodium, 2 g de lait écrémé en poudre et 38 g de lactose, et l'on chauffe le mélange à 65°C.

Puis on homogénéise le mélange tout en y incorporant 50 g de crème d'amandes douces d'abricots préalablement chauffée à 65°C, de manière à obtenir une émulsion.

On pasteurise l'émulsion à 95°C pendant 5 s et on la refroidit à 30°C.

On sèche alors l'émulsion dans un atomiseur type Niro (R) à 175°C puis à 75°C, de manière à obtenir une crème en poudre.

La poudre ainsi obtenue peut-être utilisée dans la préparation d'un pouding, d'une crème dessert, d'une crème à café, de blancs mangés ou de sauces à salades, par exemple.

## Revendications

1. Procédé de fabrication d'un lait d'amandes de fruits, dans lequel:
- on broie des amandes de fruits dans de l'eau, pour obtenir une dispersion aqueuse,
- on effectue une extraction aqueuse sur ladite dispersion,
- on écarte les insolubles de l'extrait aqueux,
- on isole une fraction riche en protéines et/ou en lipides de l'extrait aqueux,
- on homogénéise ladite fraction et on la stérilise.

2. Procédé selon la revendication 1, dans lequel on broie des amandes d'abricots dépelliculées dans de l'eau à 10-35°C dans un rapport pondéral de 1/12 à 1/3.

3. Procédé selon la revendication 2, dans lequel lesdites amandes d'abricots sont des amandes douces, on effectue ladite extraction à pH 5-11 à 10-50°C pendant 1-5 h, on écarte les insolubles, on isole ladite fraction riche en protéines et/ou en lipides par précipitation à pH 3-5 à 10-50°C, et l'on écarte le surnageant.

4. Procédé selon la revendication 2, dans lequel lesdites amandes d'abricots sont des amandes amères, on effectue ladite extraction à pH 5-11 à 10-45°C pendant 1 à 10 h, on écarte l'acide cyanhydrique de l'extrait aqueux par entraînement à la vapeur ou par distillation, on écarte les insolubles, on isole ladite fraction riche en protéines et/ou en lipides par filtration tangentielle, ultrafiltration et/ou microfiltration, et l'on écarte le filtrat ou le perméat.

5. Procédé selon la revendication 1, dans lequel on écrème ledit extrait aqueux ou ladite fraction riche en protéines et en lipides.

6. Procédé selon la revendication 1, dans lequel on homogénéise ladite fraction riche en protéines et/ou en lipides en un ou plusieurs passages à 50-1000 bar à 45-85°C.

7. Procédé selon la revendication 1, dans lequel on stérilise ladite fraction riche en protéines et/ou en lipides par chauffage à 80-160°C pendant 5 s à 60 min.

8. Procédé selon la revendication 1, dans lequel on ajoute un support de séchage à ladite fraction riche en protéines et/ou en lipides avant de l'homogénéiser, à raison de 5-50 % en poids sur matière sèche de la fraction, et on la sèche, après la stérilisation, jusqu'à une teneur en eau résiduelle de 1-7 %.

9. Utilisation de tout ou partie d'un lait obtenu par le procédé selon l'une des revendications 1 à 8 pour la fabrication d'un produit alimentaire.

10. Procédé de reconstitution d'une fraction enrichie en lipides et/ou en protéines d'amandes de fruits présentant un rapport pondéral lipides/protéines de 0,05-3,5, par mélange d'une fraction riche en protéines et/ou en lipides isolée dudit extrait aqueux selon la revendication 1 avec une crème obtenue par un écrémage selon la revendication 5.
